# EUROPEAN PATENT SPECIFICATION

(11) **EP 2 547 471 B1**
(45) Date of publication and mention of the grant of the patent: **20.04.2016**
(21) Application number: 11709456.5
(22) Date of filing: 18.02.2011
(51) Int. Cl.: B21F 27/20

(54) **METHOD AND MACHINE FOR PRODUCING MESH FROM RE-BAR, WIRE, OR OTHER MATERIAL OF PRISMATIC CROSS-SECTION BY DEPOSITION WELDING**
VERFAHREN UND MASCHINE ZUR HERSTELLUNG EINES GITTERS AUS BEWEHRUNGSSTÄBEN, DRAHT ODER ANDEREN MATERIALIEN EINES PRISMENPROFILS MITTELS AUFTRAGSSCHWEISSEN
PROCÉDÉ ET MACHINE POUR PRODUIRE UNE ARMATURE QUADRILLÉE À PARTIR DE BARRES D'ARMATURE, DE FILS DE FER OU D'UN AUTRE MATÉRIAU À SECTION PRISMATIQUE PAR UN APPORT DE MÉTAL PAR SOUDURE

(30) Priority: 15.03.2010 GR 20100100154
(43) Date of publication of application: 23.01.2013
(73) Proprietor: Anagnostopoulos, Antonios, 145 62 Kifissia Attikis (GR)
(72) Inventor: Anagnostopoulos, Antonios, 145 62 Kifissia Attikis (GR)
(74) Representative: Patentbüro Paul Rosenich AG
(86) International application number: PCT/GR2011/000008
(87) International publication number: WO 2011/114175

(56) References cited:
- EP-A1- 0 733 416
- EP-A1- 1 110 656
- US-A1- 2008 099 445

## Description

### TECHNICAL FIELD OF THE INVENTION

The present invention relates to the production of mesh from concrete-reinforcing rods, wire or other material of prismatic cross-section by deposition welding, according to claims 1 and 8.

### STATE OF THE ART - DISADVANTAGES

According to the state of the art, meshes for reinforcing building projects are produced from rebars by the method of resistance welding. During resistance welding the rods are subjected to compression one on the other, voltage is generated, and current flows through them. As a result of the electrical resistance heat is produced, which heat topically melts the material of the crossed rebars that, under force of compression are autogenously welded.

During resistance welding the two rebars are mutually drawn nearer because the melting of material has as consequence the reduction of their true cross-sections. The reduction of cross-section results in reduction of the mesh endurance and as a consequence the endurance of the building construction. Especially with large diameters, the problem is acute and for this reason the regulations limit the applications of resistance welding.

Furthermore, large diameters require large compressive forces and very strong currents, which technically limit the efficiency of the method. Resistance welding machines for meshes are energy-hungry and high-cost to build. EP0733416 discloses a method of producing mesh by way of resistance welding.

The meshes from materials of large diameter cannot be produced by resistance welding and are manually welded. Materials to be welded are manually placed in suitable locations, and subsequently are manually welded with deposition of material on the various crossings of transverse and longitudinal members.

Specialized meshes such as meshes with different diameter wires, with double wires, or with different grid holes are, in the majority, also manually produced. The wires are manually placed in the appropriate locations and subsequently manually welded using electrical welding with addition of material.

### OBJECTS OF THE PRESENT INVENTION

An object of the present invention is to present a method which bypasses the problems of resistance welding in production of meshes, and which permits welding of materials for the automatic production of meshes comprised from small to arbitrarily large diameters.

An object of the present invention is to present a system which produces mesh from material of any diameter without distorting the cross-sections of the materials subjected to welding.

### Method

The method and the mechanism are presented in an exemplary sense in the following drawings:

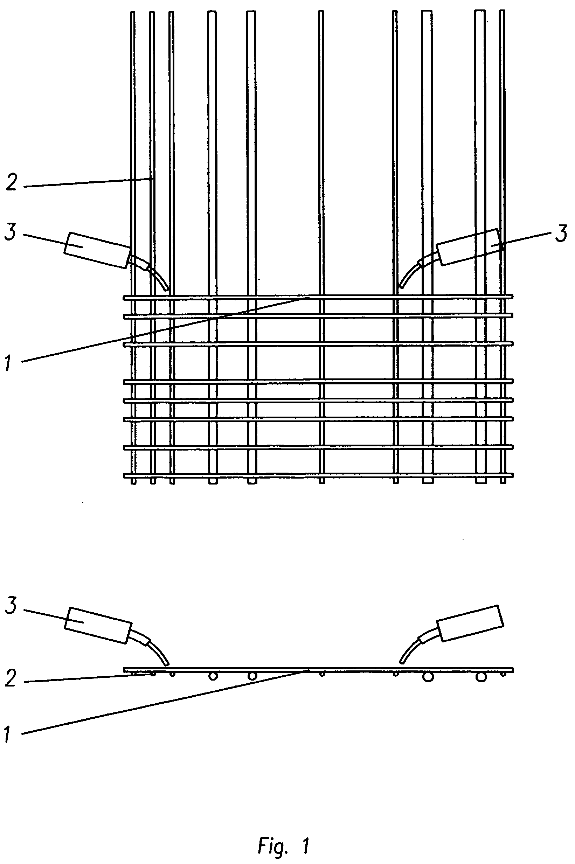

- Fig. 1:: The start of the method

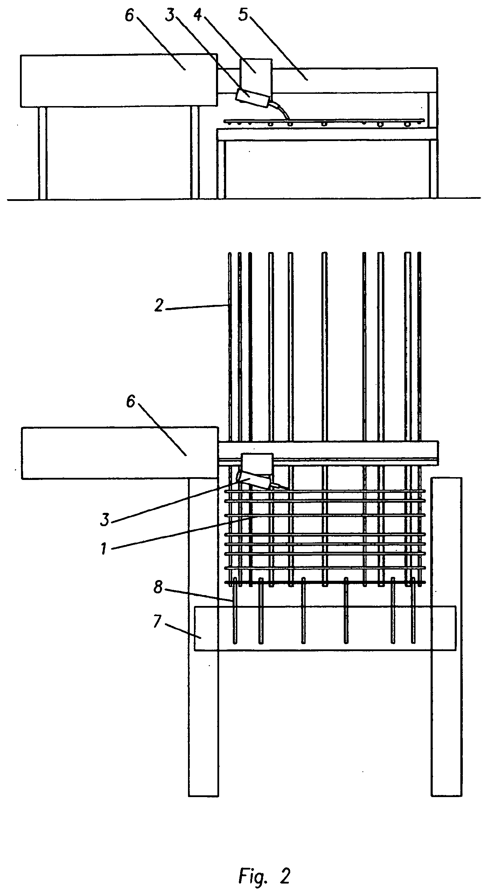

- Fig. 2:: The mechanism of the method

According to the method of the present invention, there is a row of longitudinal rebars (2) upon which are deposited one (1) or more transverse rebars (1). There is no limitation as to the number of as well as the respective distances among the longitudinal and the transverse rebars. Also, the distances between rebars may be the same or different. According to the method one or more electrical deposition welders (3) weld the transverse members (2) with the longitudinal members (1) at as many crossings as selected according to a predefined programming of welding spots.

The method of the present invention does not distort or reduce the diameter of the rebar at the welding spot, so that the rebars retain their mechanical characteristics.

The method permits the full automation of production of mesh from wire material, rebars or other material of prismatic cross-section.

According to the method, there is no limit to the diameter of the rebars. The degree of difficulty of welding is independent of the diameters of the rebars.

According to the method the diameters of the longitudinal and transverse members may be the same or different.

According to the method the diameters among the transverse rebars may differ, and the diameters among the longitudinal rebars may differ.

According to the method, one or more welding heads may weld the transverse members on the longitudinal members by moving either along the lengths of the transverse members, or along the lengths of the longitudinal members, or over the plane of the mesh so as to weld preselected different crossings of wires.

According to the method the welding heads may be transported to the welding spots, and also the wires and the under-production mesh may be transported.

According to the method there may be as many welding heads as the number of crossings of a transverse member with the longitudinal members for greatest productivity.

According to the method more than one welding head may weld more than one transverse rebar based on a program.

According to the method more than one welding head may weld more than one of the transverse rebars, which rods need not necessarily be consecutive.

According to the method the longitudinal and transverse rebars may originate from spools, being uncoiled, straightened, cut, and guided to the welding region so as to be welded.

According to the method the longitudinal rebars may be precut and straightened and guided to the welding region manually or automatically via a feeder and transport mechanisms.

According to the method the transverse rebars may be precut and straightened and guided to the welding region manually or automatically via a feeder and transport mechanisms.

According to the method the transverse as well as the longitudinal rebars may be straightened and precut and transported manually, or automatically via feeders and transport mechanisms to the welding region.

According to the method, transverse and longitudinal rebars are welded with electrical deposition welding irrespective of the manner of removal of the produced mesh.

According to the method, the transverse rebars may be located above or below the longitudinal members and be welded.

According to the method, two transverse members may be welded, above and below the longitudinal members, simultaneously.

According to the method, two longitudinal members may be welded, above and below the transverse wires.

According to the method there may be produced mesh containing mutually identical longitudinal members or mutually identical transverse members, as well as mesh with grid openings having transverse members and/or longitudinal members of differing lengths.

According to the method mesh may be welded at particular preselected spots and not at all of the crossings.

### System

The method of the present invention is implemented in an exemplary sense in the system that is described in following.

According to the proposed implementation of the method the transverse members (1) are supplied from a storage of transverse members and feeding mechanism (6) towards the region of welding. The longitudinal members (2) enter the region of welding and subsequently are pulled together with the produced mesh by carrier (7) by the action of grabs (8).

The welding head (3) is located on carrier (4) which travels on guides on bridge (5) transversely relative to the longitudinal members.

The function of the system is as follows: The transverse member (1) is deposited in the location of welding. The welding head (3) deposition welds the transverse member on the longitudinal members at preselected spots, moving the head along the length of the bridge (5). With the ending of the welding of the transverse member, carrier (7) executes the next step transporting the mesh and the longitudinal member to a suitable distance. Following that, the next longitudinal member is deposited and the head (3) welds this longitudinal member (1) on the longitudinal members (2) at the preselected crossings.

Production begins with the placement of the longitudinal members, the depositing of the first transverse member, and its welding. In following, the welded transverse member and the longitudinal members are advanced by the action of carrier (7) and grabs (8) for a suitable step, followed by the depositing and the welding of the subsequent transverse members.

The coordination and control of all of the functions of the process of production of mesh may be effected by a suitable electronic computer in which we enter the required characteristics of the product to be produced.

### THE ADVANTAGGES OF OUR METHOD

The advantages of the present method and system are:

It makes possible the welding of any large diameter wires and sections without the reduction of their cross section at the spots welded, and consequently without reduction of the endurance.

The welding mechanism is exceptionally simple.

The production cost of mesh, especially at large diameter, is significantly reduced.

The consumption of electric energy is significantly less than resistance welding.

The function of the machine is easily automated, and its maintenance is simple and of very low cost.

The present invention is not limited in any manner by the exemplary implementation described and depicted in the accompanying drawings, but may be implemented in many forms and dimensions without departing from the scope of protection claimed for this invention.

In implementations of the invention the material employed as well as the dimension of the individual elements may be commensurate with the requirements of particular applications.

In each claim where technical characteristics are referred to and followed by reference numerals, they are included only to increase comprehension of the claim and in this manner these reference numerals do not limit the interpretation of claimed elements which are identified in exemplary form by them.

## Claims

1. A method for producing mesh, especially reinforcements for concrete elements, from elongate members (1,2) such as wire, rebar or other material of prismatic cross section according to which a series of longitudinal members (2) are provided upon which one or more transverse members (1) are deposited and welded to the longitudinal members (2), **characterized in that** by means of more than one deposition welding heads the transverse members (1) and the longitudinal members (2) are welded together at preselected spots based on a program.

2. A method according to claim 1, **characterized In that** more than one deposition welding heads weld simultaneously.

3. A method according to claims 1 or 2, **characterized in that** more than one deposition welding heads simultaneously weld along the length of the longitudinal members (2) or along the length of the transverse members (1) or on the plane of the mesh.

4. A method of producing mesh according to any of claims 1to 3, **characterized in that** diameters of the longitudinal members (2) and transverse members (1) may be the same or different size in mutual respect or from member to member.

5. A method of producing mesh according to any of claims 1to 4, **characterized in that** distances among longitudinal members (2) and among transverse members (1) are constant or different, respectively, within the same mesh.

6. A method according to any of claims 1 to 5, **characterized in that** the transverse members (1) may be on top of the longitudinal members (2) or under the longitudinal members (2), or may alternate or may be simultaneously on top and under.

7. A method according to any of claims 1 to 5, **characterized in that** the longitudinal members (2) may be single or double or one on top and one below relative to the transverse members (1).

8. A system for producing mesh, especially reinforcements for concrete elements, from elongate members (1,2) such as wire, rebar or other material of prismatic cross section, according to which said mesh is comprising a series of longitudinal members (2) and a series of deposited transverse members (1) on the longitudinal members (2), said system further comprising a welding machine **characterized in that** said welding machine is formed as a deposition welding machine comprising more than one deposition welding heads (3) which can be moved along the length of the deposited transverse member (1) and which deposition weld the transverse member (1) with the longitudinal members (2) at preselected spots based on a program, subsequently the longitudinal members (2) with the under-production mesh are advanced a suitable step, the next transverse member (1) is deposited and more than one deposition welding heads (3) deposition weld the transverse member (1) to the longitudinal members (2) at preselected spots based on a program, as the deposition welding heads (3) are transported along the length of the transverse member (1).

9. A system according to claim 8, **characterized in that** more than one deposition welding heads (3) weld simultaneously.

10. A system according to claims 8 or 9, **characterized in that** more than one deposition welding heads (3) simultaneously weld along the length of the longitudinal members (2) or along the length of the transverse members (1) or on the plane of the mesh.

11. A system according to any of claims 8 to 10, **characterized in that** diameters of the longitudinal members (2) and transverse members (1) may be the same or different size in mutual respect or from member to member.

12. A system according to any of claims 8 to 11, **characterized in that** distances among the longitudinal members (2) and among the transverse members (1) are constant or different, respectively, within the same mesh.

13. A system according to any of claims 8 to 12, **characterized in that** the transverse members (1) may be arranged on top of the longitudinal members (2) or under the longitudinal members (2), or may alternate or may be simultaneously on top and under.

14. A system according to any of claims 8 to 13, **characterized in that** the longitudinal members (2) may be single or double or one on top and one below relative to the transverse members (1).

15. A system according to any of claims 8 to14, **characterized in that** a supervision, a coordination and a control of all the functions of the process of feeding longitudinal and transverse wires (2,1) as well as that of deposition welding are effected by a suitable electronic computer containing the necessary characteristics of the under-production mesh and which electronic computer also controls the other functions of the welding machine.

## Patentansprüche

1. Verfahren zur Herstellung von Gittern, insbesondere von Verstärkungen für Betonelemente, aus länglichen Elementen (1, 2), wie beispielsweise Draht, Armierungsstäben oder anderem Material mit prismatischem Querschnitt, gemäß dem eine Reihe von Längselementen (2) bereitgestellt wird, auf der ein oder mehrere Querelemente (1) abgelegt und an die Längselemente (2) geschweißt werden, **dadurch gekennzeichnet, dass** die Querelemente (1) und die Längselemente (2) an vorgewählten Punkten mittels mehr als eines Kopfes zum Auftragsschweißen auf einem Programm basierend miteinander verschweißt werden.

2. Verfahren nach Anspruch 1, **dadurch gekennzeichnet, dass** die mehreren Köpfe zum Auftragsschweißen gleichzeitig schweißen.

3. Verfahren nach Anspruch 1 oder 2, **dadurch gekennzeichnet, dass** die mehreren Köpfe zum Auftragsschweißen gleichzeitig entlang der Länge der Längselemente (2) oder entlang der Länge der Querelemente (1) oder auf der Ebene des Gitters schweißen.

4. Verfahren zur Herstellung von Gittern nach einem der Ansprüche 1 bis 3, **dadurch gekennzeichnet, dass** die Durchmesser der Längselemente (2) und der Querelemente (1) in wechselseitiger Beziehung oder von Element zu Element die gleiche oder eine unterschiedliche Größe aufweisen können.

5. Verfahren zur Herstellung von Gittern nach einem der Ansprüche 1 bis 4, **dadurch gekennzeichnet, dass** die Abstände zwischen den Längselementen (2) und zwischen den Querelementen (1) im gleichen Gitter gleichmäßig oder unterschiedlich sein können.

6. Verfahren nach einem der Ansprüche 1 bis 5, **dadurch gekennzeichnet, dass** die Querelemente (1) auf den Längselementen (2) oder unter den Längselementen (2) oder abwechselnd oder gleichzeitig darüber und darunter liegen können.

7. Verfahren nach einem der Ansprüche 1 bis 5, **dadurch gekennzeichnet, dass** die Längselemente (2) einzeln oder doppelt oder eins oberhalb und eins unterhalb der Querelemente (1) liegen können.

8. System zur Herstellung von Gittern, insbesondere von Verstärkungen für Betonelemente, aus länglichen Elementen (1, 2), wie beispielsweise Draht, Armierungsstäben oder anderem Material mit prismatischem Querschnitt, gemäß dem das Gitter eine Reihe von Längselementen (2) und eine Reihe von auf den Längselementen (2) aufgelegten Querelementen (1) umfasst, wobei das System ferner eine Schweißmaschine umfasst, **dadurch gekennzeichnet, dass** die Schweißmaschine als Maschine zum Auftragsschweißen gebildet ist, die mehr als einen Kopf (3) zum Auftragsschweißen umfasst, der über die Länge des aufgelegten Querelementes (1) bewegt werden kann und der das Querelement (1) an vorgewählten Punkten auf einem Programm basierend mit den Längselementen (2) auftragsverschweißt, wonach die Längselemente (2) mit dem in der Herstellung befindlichen Gitter einen geeigneten Schritt vorgerückt, das nächste Querelement (1) aufgelegt und an vorgewählten Punkten basierend auf einem Programm mit mehr als einem Kopf (3) zum Auftragsschweißen mit den Längselementen (2) auftragsverschweißt wird, während die Köpfe (3) zum Auftragsschweißen über die Länge des Querelements (1) befördert werden.

9. System nach Anspruch 8, **dadurch gekennzeichnet, dass** die mehreren Köpfe (3) zum Auftragsschweißen gleichzeitig schweißen.

10. System nach Anspruch 8 oder 9, **dadurch gekennzeichnet, dass** die mehreren Köpfe (3) zum Auftragsschweißen gleichzeitig entlang der Länge der Längselemente (2) oder entlang der Länge der Querelemente (1) oder auf der Ebene des Gitters schweißen.

11. System nach einem der Ansprüche 8 bis 10, **dadurch gekennzeichnet, dass** die Durchmesser der Längselemente (2) und der Querelemente (1) in wechselseitiger Beziehung oder von Element zu Element die gleiche oder eine unterschiedliche Größe aufweisen können.

12. System nach einem der Ansprüche 8 bis 11, **dadurch gekennzeichnet, dass** die Abstände zwischen den Längselementen (2) und den Querelementen (1) im gleichen Gitter gleichmäßig oder unterschiedlich sein können.

13. System nach einem der Ansprüche 8 bis 12, **dadurch gekennzeichnet, dass** die Querelemente (1) auf den Längselementen (2) oder unter den Längselementen (2) oder abwechselnd oder gleichzeitig darüber und darunter angeordnet sein können.

14. System nach einem der Ansprüche 8 bis 13, **dadurch gekennzeichnet, dass** die Längselemente (2) einzeln oder doppelt oder eins oberhalb und eins unterhalb der Querelemente (1) liegen können.

15. System nach einem der Ansprüche 8 bis 14, **dadurch gekennzeichnet, dass** eine Überwachung, eine Koordination und eine Steuerung aller Funktionen des Prozesses des Zuführens von Längs- und Querdrähten (2, 1) sowie des Auftragsschweißens von einem geeigneten elektronischen Computer bewirkt werden, der die notwendigen Eigenschaften des in der Herstellung befindlichen Gitters enthält und der außerdem die anderen Funktionen der Schweißmaschine steuert.

## Revendications

1. Procédé de production de maillage, en particulier de renforts pour éléments en béton, à partir d'éléments allongés (1, 2) comme du fil de fer, des barres d'armature ou d'autres matériels de section transversale prismatique selon lequel une série d'éléments longitudinaux (2) sont prévus, éléments sur lesquels un ou plusieurs éléments transversaux (1) sont déposés et soudés aux éléments longitudinaux (2), **caractérisé en ce que**, au moyen de plus d'une tête de soudage par dépôt, des éléments transversaux (1) et les éléments longitudinaux (2) sont soudés ensemble à des points présélectionnés en se basant sur un programme.

2. Procédé selon la revendication 1, **caractérisé en ce que** plus d'une tête de soudage par dépôt soudent simultanément.

3. Procédé selon les revendications 1 ou 2, **caractérisé en ce que** plus d'une tête de soudage par dépôt soudent de me simultanément sur la longueur des éléments longitudinaux (2) ou sur la longueur des éléments transversaux (1) ou sur le plan du maillage.

4. Procédé de production de maillage selon l'une quelconque des revendications 1 à 3, **caractérisé en ce que** les diamètres des éléments longitudinaux (2) et des éléments transversaux (1) peuvent être de taille identique ou différente les uns par rapport aux autres ou d'un élément à l'autre.

5. Procédé de production de maillage selon l'une quelconque des revendications 1 à 4, **caractérisé en ce que** les distances entre les éléments longitudinaux (2) et les caisses éléments transversaux (1) sont constantes ou différentes respectivement dans le même maillage.

6. Procédé de production de maillage selon l'une quelconque des revendications 1 à 5, **caractérisé en ce que** les éléments transversaux (1) peuvent se trouver au-dessus des éléments longitudinaux (2) ou au-dessous des éléments longitudinaux (2) ou peuvent alterner ou peuvent se trouver simultanément sur au-dessus et au-dessous.

7. Procédé de production de maillage selon l'une quelconque des revendications 1 à 5, **caractérisé en ce que** les éléments longitudinaux (2) peuvent être uniques ou doubles ou un au-dessus et un au-dessous par rapport aux éléments transversaux (1).

8. Système de production de maillage, en particulier de renforts pour éléments en béton, à partir d'éléments allongés (1, 2) comme du fil de fer, des barres d'armature ou d'autres matériels de section transversale prismatique selon lequel ledit maillage comprend une série d'éléments longitudinaux (2) et une série d'éléments transversaux déposés (1) sur les éléments longitudinaux (2), ledit système comprenant en outre une machine à souder, **caractérisé en ce que** ladite machine à souder est réalisée sous forme d'une machine de soudage par dépôt comprenant une ou plusieurs têtes de soudage par dépôt (3) qui peuvent se déplacer sur la longueur de l'élément transversal déposé (1) et qui soudent par dépôt l'élément transversal (1) aux éléments longitudinaux (2) à des points présélectionnés en se basant sur un programme, les éléments longitudinaux (2) étant ensuite avancés avec le maillage de la production du dessous au cours d'une étape adaptée, l'élément transversal suivant (1) étant déposé et plus d'une tête de soudage par dépôt (3) soudant par dépôt l'élément transversal (1) aux éléments longitudinaux (2) à des points présélectionnés en se basant sur un programme lorsque les têtes de soudage par dépôt (3) sont transportées sur la longueur de l'élément transversal (1).

9. Système selon la revendication 8, **caractérisé en ce que** plus d'une tête de soudage par dépôt (3) soudent simultanément.

10. Système selon la revendication 8 ou 9, **caractérisé en ce que** plus d'une tête de soudage par dépôt (3) soudent simultanément sur la longueur des éléments longitudinaux (2) ou sur la longueur des éléments transversaux (1) ou sur le plan du maillage.

11. Système selon l'une quelconque des revendications 8 à 10, **caractérisé en ce que** les diamètres des éléments longitudinaux (2) et des éléments transversaux (1) peuvent être de taille identique ou différentes les uns par rapport aux autres ou d'un élément à l'autre.

12. Système selon l'une quelconque des revendications 8 à 11, **caractérisé en ce que** les distances entre les éléments longitudinaux (2) et les caisses éléments transversaux (1) sont constantes ou différentes respectivement dans le même maillage.

13. Système selon l'une quelconque des revendications 8 à 12, **caractérisé en ce que** les éléments transversaux (1) peuvent se trouver au-dessus des éléments longitudinaux (2) ou au-dessous des éléments longitudinaux (2) ou peuvent alterner ou peuvent se trouver simultanément sur au-dessus et sur au-dessous.

14. Système selon l'une quelconque des revendications 8 à 13, **caractérisé en ce que** les éléments longitudinaux (2) peuvent être uniques ou doubles ou un au-dessus et un au-dessous par rapport aux éléments transversaux (1).

15. Système selon l'une quelconque des revendications 8 à 14, **caractérisé en ce qu'**une supervision, une coordination et une commande de toutes les fonctions du processus d'apport de fils longitudinaux et transversaux (2, 1), de même que de soudage par dépôt, sont effectuées par un ordinateur électronique approprié contenant les caractéristiques nécessaires du maillage de la production du dessous, lequel ordinateur électronique commandant également les autres fonctions de la machine à souder.
